# EUROPEAN PATENT SPECIFICATION

(11) **EP 2 328 939 B1**
(45) Date of publication and mention of the grant of the patent: **12.12.2012**
(21) Application number: 09783634.0
(22) Date of filing: 01.10.2009
(51) Int. Cl.: C08F 4/02, C08F 210/16, C08F 4/6592, C08F 4/70

(54) **ACTIVATING SUPPORTS BASED ON PERFLUORINATED BORONIC ACIDS**
AKTIVIERUNG VON TRÄGERN AUF BASIS VON PERFLUORIERTEN BORONSÄUREN
SUPPORTS ACTIVATEURS À BASE D'ACIDES BORONIQUES PERFLUORÉS

(30) Priority: 02.10.2008 EP 08290933
(43) Date of publication of application: 08.06.2011
(73) Proprietor: TOTAL RESEARCH & TECHNOLOGY FELUY, 7181 Seneffe (BE); Centre National de la Recherche Scientifique (C.N.R.S), 75016 Paris (FR)
(72) Inventor: PANNIER, Gaëlle, F-77167 Poligny (FR); BOISSON, Christophe, F-01390 Tramoyes (FR); SPITZ, Roger, F-69006 Lyon (FR); SLAWINSKI, Martine, B-9300 Aalst (BE)
(74) Representative: Leyder, Francis
(86) International application number: PCT/EP2009/062744
(87) International publication number: WO 2010/037808

(56) References cited:
- WO-A-02/098930
- DE-A1- 19 744 102
- DE-A1- 19 962 814

## Description

This invention relates to the field of activation of metallocene complexes, particularly in homogeneous catalysis, to their method of preparation and to their use in the polymerisation of olefins.

The polymerisation of olefins in the presence of metallocene complexes has been described both in homogeneous and heterogeneous catalysis.

In homogeneous polymerisation, the catalyst, the olefin monomer and the resulting polymer are all present in the same liquid phase, typically a solvent.

Heterogeneous polymerisation, such as suspension or gas phase polymerisation offers many advantages, among others, it allows the preparation of polymers in granular form having a defined particles size distribution.

It is known in the art to (co)polymerise ethylene and alpha-olefins in the presence of a catalyst system comprising a metallocene catalyst component and an activating agent. As disclosed in Chen (Chen E., Chem. Rev., 2000, 100, 1391) homogeneous activating agents range from simple aluminiumalkyls such as diethylaluminium chloride with Cp₂TiCl₂, to methylaluminoxane (MAO) alone or modified, to perfluoroarylboranes, perfluoroarylalanes, perfluoroarylborates and perfuoroarylaluminates in combination with alkylating agents such as triisobutylaluminium.

These activators are costly, unstable, dangerous and produce polymers that have a poor morphology, therefore incompatible with high yield processes in suspension or gas phase polymerisation. The catalytic system, i.e. the metallocene complex and its activator, must be supported on a solid support in order to be used in these polymerisation processes.

The most typical technique is to support onto solid supports, homogeneous activators such as MAO as described for example by Chien (J. Polym. Sci., Part A : Pol. Chem., 1991, 29, 1603.), or by Collins (Macromolecules, 1992, 25, 1780), or by Soga (Makromol. Chem., 1993, 194, 1745) or by Kaminsky (Makromol.Chem.Rapid Commun., 1993, 14, 239) or such as perfluoroarylborates as described for example in US-A-5643847 or such as perfluoroarylaluminates.

Polymers obtained with these systems have regular grain size and high apparent densities, thereby decreasing reactor fouling with respect to homogeneous polymerisation.

These catalytic systems using supported homogeneous activators are less active than equivalent homogeneous systems and the polymer properties may be degraded.

A new generation of solid activating supports has been developed and is described for example in Marks (J. Am. Chem. Soc., 1998, 120, 13533): it concerns sulfated zircone particles or also by McDaniel (WO-9960033, WO-0123433, WO-0123434, WO-0144309, WO-0149747 et US-A-6548441) or by Saudemont (FR-A-2765225). All these activators are solids having surface acid sites that are responsible for the activation. These acid sites are metals combined with halides such as fluor or chlorine; metals can be selected from aluminium, titanium, zirconium or nickel. Equivalent species in homogeneous catalysis are very poor activators.

Compounds such as dimethylaluminium fluoride (DMF) are used as activators in combination with triethylaluminium for the stereospecific polymerisation of propylene with compounds of the metallocene family with very low productivity as described by Zambelli (Macromolecules 1989, 22, 2186). They are thus very poor activators.

Patent application WO-0123433 claims a tri-component catalytic system comprising a compound of the metallocene family, an organoaluminium and a fluorinated silica-alumina acting as activator and obtained from a silica-alumina and a fluorinating agent. The surface acid sites are fluor and aluminium. The drawback of this invention resides in the site definition and in the use of a fluorinating agent.

Patent FR-A-2769245 also claims a tri-component system comprising a compound of the metallocene family pre-alkylated or not pre-alkylated, a co-catalyst that can be selected from alkyl aluminium or oligomeric cyclic alkyl aluminoxane and a solid activating support having surface aluminium or magnesium acid sites of formula:

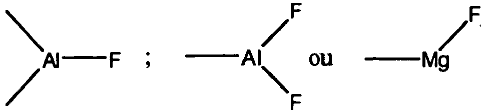

The preparation of these activating supports involves several steps: it is long and requires a separate fluorination step. In addition, it is necessary to use activating agents such as MAO in order to reach an acceptable activity. The use of MAO is detrimental to the morphology of the final polymer.

US-A-5,449,650, WO99/18135 and EP-A-1264847 disclose the use of a compound of formula R₂Al-O-B(R)-O-AlR₂ to activate organometallic complexes based on transition metals Groups 3 to 10 of the Periodic Table, including lanthanides and actinides. These compounds were used successfully in the homogeneous polymerisation of ethylene. These compounds used 2 equivalents of aluminium with respect to boron and they did not exhibit any OH groups.

WO02/098930 discloses the impregnation onto a support of the reaction product of boronic acid and aluminium alkyl wherein the ratio Al/B is of from 2 to 50. These activating supports were tested in the copolymerisation of ethylene and 1-butene with a metallocene catalyst component under a pressure of 24 bars and at a temperature of 70 °C.

US-A-7,232,869 discloses activating supports used in the polymerisation of propylene. The supporting includes the reaction product of boronic acid and aluminium alkyl in the presence of N,N-dimethylbenzylamine. The surface species are aluminates that behave like borates.

There is thus a need to develop activating supports, wherein the activity is sufficient to suppress the need for an homogeneous activating agent such as methylaluminoxane (MAO) that degrades the polymer morphology.

It is an aim of the present invention to prepare species exhibiting metal-OH groups.

It is also an aim of the present invention to prepare active supported catalyst systems that have a very high activity and productivity, comparable to those of homogeneous systems.

It is another aim of the present invention to prepare active catalyst systems that do not require an homogeneous activating agent such as MAO.

It is yet another aim of the present invention to prepare polymers having excellent polymer morphology.

Any one of these aims is, at least partially, fulfilled by the present invention.

Accordingly, the present invention provides a method for preparing activating supports for the activation of metallocene or single site catalyst components that comprises the steps of:
a) reacting an alkylated derivative of aluminium and a perfluorinated boronic acid in stoechiometric quantities at a temperature of less than -5°C, in a solvent selected from alkane;
b) optionally, evaporating, drying and dissolving in toluene the reaction product of step a)
c) providing a support consisting in particles formed from at least one porous mineral oxide;
d) deshydroxylating the support by heating;
e) impregnating the reaction product either of step a) or of step b) on the deshydroxylated support;
f) washing and drying the support of step e);
g) retrieving an activating support.

When the alkylated derivative of aluminium is reacted with one equivalent of perfluorinated boronic acid, the final product formed is of general formula Rₙ-Al-O-B(OH)-R'ₚ. As soon as there is an excess of aluminium compound such as disclosed for example in DE-19744102 or in US2003/0008984, there is predominantly formation of compounds of formula Rₙ-Al-O-BR"-O-Al-R'q. It must further be noticed that boron remains associated with an (OH) group in the present organoboron compound.
The porous mineral oxides are advantageously chosen from silica, alumina and mixtures thereof. Preferably, the support is silica.

The support particles preferably have at least one of the following characteristics:
- they include pores having a diameter ranging from 7.5 to 30 nm;
- they have a porosity ranging from 1 to 4 cm³ /g;
- they have a specific surface area ranging from 100 to 1000 m² /g; and
- they have an average diameter ranging from 1 to 100 µm.

Before it is functionalised, the support is deshydroxylated by a thermal treatment in order to obtain a number of --OH radicals on its surface, preferably of from 0.25 to 10 --OH radicals per nm², and more preferably of from 0.5 to 4 --OH radicals, per nm². The thermal treatment is carried out under inert gas, such as for example nitrogen or argon, at atmospheric pressure or under a vacuum of about 10⁻⁵ bars, at a temperature of from 100 to 1000 °C, preferably at a temperature of from 120 to 800 °C and more preferably at a temperature of from 140 to 700 °C, during a period of time of at least 60 minutes. Alternatively, the number of -OH radicals on the surface of the support can be controlled by a chemical treatment. Optionally, the silica may be mixed, for example, with NH₄Cl so as to accelerate the dehydration.

The support may be of various kinds. Depending upon its nature, its state of hydration and its ability to retain water, it may undergo dehydration treatments of greater or lesser intensity according to the desired surface content of --OH radicals.

The alkylated derivative of aluminium is

AlR^{m}ₙX'₃₋ₙ

wherein the R^{m} groups, may be the same or different, and are a substituted or unsubstituted alkyl, containing from 1 to 12 carbon atoms such as for example methyl, ethyl, isobutyl, n-hexyl and n-octyl, X' is a halogen or hydrogen and n is an integer from 1 to 3.
Preferably, it is aluminium alkyl, more preferably it is triisobutylaluminium (TiBA) or triethylaluminium (TEA) or fluorinated diethylaluminium (DEAF) and most preferably, it is TEA.

Preferably the perfluorinated boronic acid is pentafluorophenylboronic acid.

Hessen et al. (Chem. Comm., 2001, 1286 and Angew. Chem. Int. Ed. 2002, 41, 2166) have demonstrated that the stoechiometric reaction of boronic acid with aluminium alkyl, at low temperature, in an alkane, led to the formation of a species exhibiting free OH groups. If the reaction is carried out in toluene at a temperature of 50 °C, the resulting species no longer has free OH groups but exhibits a cage structure with a Al-O-B network. In the present invention, the aluminium alkyl and the pentafluorophenylboronic acid are reacted in stoechiometric quantities at low at a temperature of less than -5 °C, preferably of at most -10°C in a solvent, and for a period of time of at least one hour, preferably at least 2 hours.

The solvent is preferably an alkane such as for example heptane. One characteristic of boronic acids is their ability to loose water by dehydration and thus form a boroxine as discussed by Dennis G. Hall in "Boronic acids", Wiley VCH, 2005. It is therefore not obvious to use a boronic acid in a dry solvent since the product can partially condensate to form an anhydride of boroxin type and water. This can particularly happen in a solvent that can accept water such as toluene. In the present invention an alkane and preferably heptane is used as solvent instead of toluene, typically used in the preparation of organoboron-aluminum compounds. When toluene is used, there is certainly formation of water that reacts with the alkylaluminium present in the reaction medium thereby forming aluminoxane which is an excellent activator for metallocene catalyst components. Activities observed in prior art systems using toluene as a solvent are thus in large part due to the formation of aluminoxane in situ. In the present invention, the formation of aluminoxane is ruled out by selecting heptane as solvent.

Impregnation step e) is carried out in toluene at room temperature (about 25 °C) for a period of time of about one hour.

The impregnated support is then washed several times for example in toluene and then dried under dynamic vacuum.

The activating support of the present invention is used to activate metallocene catalyst components and post-metallocene catalyst components that are susceptible to form cationic complexes in the presence of such activators.

The counter anion of the active cationic complex may be constituted of a solid support preferably having a defined and controlled structure such as that of supports used in Ziegler-Natta catalysis. In order to enable the physical development of polymerisation, said support is functionalised to create surface acid sites that can effectively activate the metallocene complex.

The preferred metallocene catalyst components are of general formula (I).

(CₚRₘ)R"ₛ(C'ₚR'ₙ)MQ₂ (I)

wherein Cp and C'p are independently selected from cyclopentadienyl, indenyl or fluorenyl, substituted or unsubstituted;
wherein R and R' are independently selected from hydrocarbyl having from 1 to 20 carbon atoms;
wherein s is zero if the bridge is absent and 1 if the bridge is present;
wherein m and n are integers representing the number of substituents;
wherein R" is a structural bridge imparting stereorigidity to the compound;
wherein M is a metal Group 4 of the Periodic Table, selected from Ti, Zr or Hf; and wherein Q is halogen or alkyl having from 1 to 6 carbon atoms.

The activating supports of the present invention may also activate constrained geometry catalyst components of formula (II)

(CpRₘ)R"ₛ(YR"ₙ)MQ2

wherein Y is a metal group 15 of the Periodic Table. Preferably, Y is N, O or P. More preferably, it is N.

Preferably, the bridge is present. It may be an alkylene radical, such as a methylene radical (-CR₂ -), an ethylene radical (-CH₂ CH₂ -) or a trimethylene radical (-CH₂ -CH₂ -CH₂ -), said alkylene radical being unsubstituted or substituted, for example by at least one hydrocarbon group, such as for example the isopropylidene radical; it may also be a silylene (-SiH₂) group, optionally substituted, for example by at least one hydrocarbon group. One can cite a dialkylsilylene radical such as for example dimethylsilylene, a diarylsilylene radical such as for example diphenylsilylene or an alkylarylsilylene radical such as for example methylphenylsilylene.

Preferably, Q is chlorine or methyl.

By way of example, the metallocene catalyst may be chosen from the following compounds:
bis(n-butylcyclopentadienyl)zirconium dichloride [(n-but-Cₚ)₂ ZrCl₂];
ethylenebis(4,5,6,7-tetrahydro-1-indenyl)zirconium dichloride [Et(THI)₂ZrCl₂ ];
ethylenebis(indenyl)zirconium dichloride [Et(Ind)₂ZrCl₂ ];
isopropylidene(cyclopentadienyl-fluorenyl)zirconium dichloride [iPr(Cp)(Flu)ZrCl₂ ];
isopropylidenebis(tert-butyl-cyclopentadienyl)zirconium dichloride [iPr(t-Bu-Cp)₂ ZrC)₂];
dimethylsilyl(3-tert-butyl-cyclopentadienyl-fluorenyl)zirconium dichloride [Me₂Si(3-t-Bu-Cp-Flu)ZrCI_{2]};
dimethylsilyl-bisindenyl-zirconium dichloride [Me₂Si(Ind)₂ZrCl₂];
ethylenebis(4,5,6,7-tetrahydro-1-indenyl)dimethylzirconium [Et(THI)₂ZrMe₂];
ethylenebis(indenyl)dimethylzirconium [Et(Ind)₂ZrMe₂];
isopropylidene(cyclopentadienyl-fluorenyl)dimethylzirconium [iPr(Cp-Flu) ZrMe₂];
dimethylsilyl(3-tert-butylcyclopentadienyl-fluorenyl)dimethylzirconium [Me₂Si(3-t-Bu-Cp-Flu) ZrMe₂];
dimethylsilyl(tetramethylcyclopentadienyl-tert-butylamino)zirconium dichloride [Me₂Si(Me₄-Cp-t-but-N)ZrCl_{2]} ;
dimethylsilyl(tetramethylcyclopentadienyl-tert-butylamino)dimethyltitanium,
[Me₂Si(Me₄-Cp-t-but-N)TiMe₂ ;
ethylenebis(4,5,6,7-tetrahydro-1-indenyl)dimethyltitanium [Et(THI)2 TiMe₂];
ethylenebis(indenyl)dimethyltitanium [Et(Ind)₂TiMe₂];
isopropylidene(cyclopentadienyl-fluorenyl)dimethyltitanium [iPr(Cp-Flu) TiMe₂];
dimethylsilyl(3-tert-butyl,5-methyl-cylopentadienyl-fluorenyl) zirconium dichloride [Me₂Si(3-t-Bu,S-Me-Cp-Flu) ZrCl₂] ;
Isopropylidene(3-tert-butyl,5-methyl-cylopentadienyl-3,6-tert-butyl-fluorenyl) zirconium dichloride [iPr(3-t-Bu,5-Me-Cp-3,6-t-Bu-Flu) ZrCl₂];
dimethylsilyl(tetramethylcyclopentadienyl, tert-butylamino)titanium dichloride [Me₂Si(Me4-Cp-t-Bu-N)TiCl₂].

The activating support of the present invention may further activate bidentate complexes based on Ni, Pd such as Brookhart's alpha-diimine Pd and Ni complexes.

The present invention also discloses a method for homo- or co-polymerising ethylene and alpha-olefins that comprises for example the steps of:
a) injecting the solvent and optionally a scavenger/alkylating agent into the reactor;
b) injecting the activating support described hereabove into the reactor;
c) injecting a solution of the catalyst component into the reactor;
d) optionally, injecting the comonomer into the reactor,
e) injecting the monomer into the reactor and heating to a temperature of from 60 to 100 °C;
f) maintaining under polymerisation conditions;
g) desactivating the reactor and retrieving the polymer.

The mass of catalyst component over the mass of activating support is in the range of 0.3 to 5/100.

The preferred monomer is ethylene or propylene, more preferably ethylene. The preferred comonomer is propylene, butylene or hexene.

The scavenger or alkylating agent is typically an aluminium alkyl. If the catalyst component is a halogenated complex, the alkylating agent is required to transform it into a dialkylated complex. The preferred alkylating agent is triisobutyl aluminium (TIBA)

The polymer obtained with the present catalyst system are characterised by a good morphology, in the form of spherical grains. Their weight average molecular weight is in the range of 200 to 600 kDa and their molecular weight distribution is of from 4 to 10. The molecular weight distribution is described by the polydispersity index that is the ratio Mw/Mn of the weight average molecular weight distribution Mw over the number average molecular weight distribution Mn; The molecular weights are measured by universal calibration.

The scavenger, if present is typically an aluminium alkyl such as for example TiBA or TEA, preferably TiBA.

The present catalyst system is characterised by an excellent activity of at least 10⁷ grams of polymer per mole of metal per hour. When the amount of metal is increased with respect to the amount of support, the activity either remains constant or increases slightly depending upon the support used.

### List of Figures.

Figure 1 represent the morphology of support S4.
Figure 2 represents the molecular weight distribution of the copolymer of ethylene and 1-hexene of example 8. It was determined by Temperature Raising Elution Fractionation (TREF) showing the grade composition in 1-hexene
Figure 3 represents the morphology of the copolymer of ethylene and 1-hexene of example 8 obtained with activating support S4.

### Examples.

The solvents used in the synthesis of activating supports and in the polymerisation reactions were dried on 3 Angströms (1Å=10⁻¹⁰m) molecular sieves. The Schlenk techniques were used for all preparations. The comonomer 1-hexene was dried over CaH₂ and then cryodistilled. The ethylene used in polymerisation was purchased from Air Liquide and purified by passage on 3 consecutive columns in order to eliminate all traces of water and oxygen.

### Synthesis of activating supports.

Boronic acid and aluminiumalkyl were mixed in stoechiometric amounts in heptane and kept under stirring at a temperature of -10 °C for a period of time of 2 hours. The solvent was evaporated under dynamic vacuum and the resulting solid was redissolved in toluene. Silica (Crossfield ES70X) was deshydroxylated by heating under a vacuum of about 10⁻⁵ bars according to the following temperature program:
- heated from 30 to 100 °C in one hour;
- heated from 100 to 130 °C in 30 minutes;
- heated from 130 to 450 °C in one hour;
- maintained at a temperature of 450 °C for 4 hours.

The homogeneous solution of boronic acid and aluminium alkyl was impregnated on the deshydroxylated silica support at room temperature for a period of time of 1 hour. The impregnated support was then washed and dried under dynamic vacuum.

### Example 1-Synthesis of activating support S1.

565 mg (2.67 mmol) of pentafluorophenyl boronic acid were suspended in heptane at a temperature of -10 °C. 2.9 mL (2.67 mmol) of TEA in solution in heptane (0.92 mol/L) was added. The mixture was kept under stirring at a temperature of -10 °C for a period of time of 2 hours. The solvent was then evaporated under dynamic vacuum. The resulting product was dissolved in toluene and then impregnated on 1.24 g of silica that had been deshydroxylated by heating under a vacuum of about 10⁻⁵ bars according to the following temperature program:
- heated from 30 to 100 °C in one hour;
- heated from 100 to 130 °C in 30 minutes;
- heated from 130 to 450 °C in one hour;
- maintained at a temperature of 450 °C for 4 hours.
The impregnation reaction was carried out at room temperature for a period of time of 1 hour. The impregnated support was washed 3 times in toluene and dried under dynamic vacuum.

### Example 2a-Copolymerisation of ethylene and 1-hexene with activating support S1.

Activating support S1 was used with metallocene catalyst component isopropylidene bisindenyl zirconium dichloride (Et(Ind)₂ZrCl₂). The polymerisation was carried out in the presence of 1-hexene, 25% molar with respect to ethylene, at a temperature of 80 °C, under a pressure of 3 bars of ethylene, in 300 mL of heptane, with 1 mmol/L of TiBA added as scavenger and for a period of time of 1 hour. The ratio m_{metallocene}/mₛᵤₚₚₒᵣₜ was varied between 0.4 and 2%. The results are reported in Table I.

### Example 2b -Copolymerisation of ethylene and 1-hexene with metallocene catalyst component impregnated on activating support S1.

A solution of 300 mL of TiBA (1 mmol/L) in heptane was prepared. 3.15 mg of activating support S1 were introduced into a 50 mL balloon. 2mL of the solution of TiBA in heptane were added to the activating support. Metallocene catalyst component Et(Ind)₂ZrCl₂ (1 mmol/L) was dissolved in toluene and added to the activating support. The support turned yellow, thus showing complete migration of the metallocene compound to the support's surface. The support mixture was added to the remaining TiBA solution and 2 mL of 1-hexene were added in the reaction medium. The polymerisation of ethylene was then carried out exactly as in example 2a. The ratio m_{metallocene}/mₛᵤₚₚₒᵣₜ was varied between 0.4 and 2%. The results are reported in Table I.

### Example 3 - Synthesis of activating support S2.

553.2 mg (2.61 mmol) of pentafluorophenylboronic acid were suspended in heptane at a temperature of -10 °C. 1.98 mL (2.61 mmol) of TiBA in solution in heptane (1.32 mol/L) were added. The mixture was kept under stirring at a temperature of - 10°C for a period of time of 2 hours and the solvent was then removed under dynamic vacuum. The resulting product was dissolved in toluene and then impregnated on 1.31 g of deshydroxylated silica. The impregnation reaction was carried out at room temperature for a period of time of 1 hour. The impregnated support was washed 3 times in toluene and dried under dynamic vacuum.

### Example 4 - Copolymerisation of ethylene and 1-hexene with activating support S2.

The polymerisation of ethylene was carried out as in example 2a. The results are also reported in Table I.

### Example 5 - Synthesis of activating support S3.

567.4 mg (2.68 mmol) of pentafluorophenylboronic acid were suspended in heptane at a temperature of -10 °C. 1.86 mL (2.68 mmol) of DEAF in solution in isopar (1.44 mol/L) were added. The mixture was kept under stirring at a temperature of - 10°C for a period of time of 2 hours and the solvent was then removed under dynamic vacuum. The resulting product was dissolved in toluene and then impregnated on 1.11 g of deshydroxylated silica.The impregnation reaction was carried out at room temperature for a period of time of 1 hour. The impregnated support was washed 3 times in toluene and dried under dynamic vacuum.

### Example 6 - Copolymerisation of ethylene and 1-hexene with activating support S3.

The polymerisation of ethylene was carried out as in example 2a. The results are also reported in Table I.

### Example 7 - Synthesis of activating support S4.

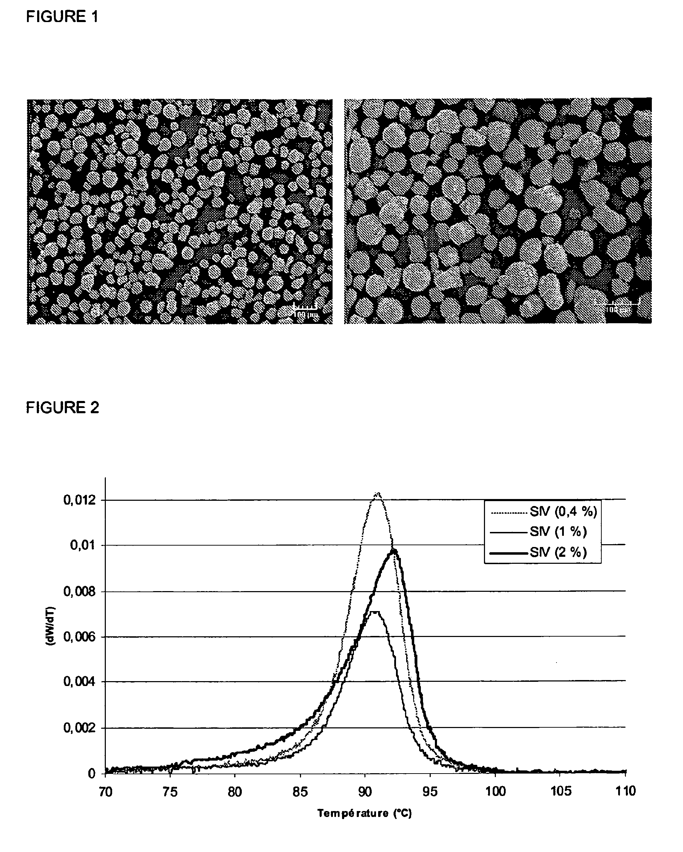

565.3 mg (2.67 mmol) of pentafluorophenylboronic acid were suspended in heptane at a temperature of -10 °C. 3.76 mL (2.67 mmol) of TEA in solution in heptane (0.71 mol/L) were added. 1.45 g of deshydroxylated silica were suspended in toluene and brought to a temperature of -10 °C. The mixture of boronic acid and TEA was added to the silica suspension and kept under stirring at a temperature of -10 °C for a period of time of 2 hours. The impregnation reaction was then pursued at room temperature and under stirring for a period of time of 1 hour. The impregnated support was washed 3 times in toluene and dried under dynamic vacuum. The morphology of support S4 is represented in Figure 1.

### Example 8 - Copolymerisation of ethylene and 1-hexene with activating support S4

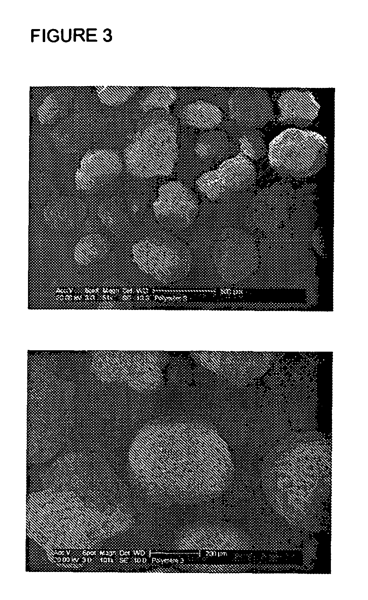

The copolymerisation of ethylene and 1-hexene was carried out as in example 2a. The results are also reported in Table I. The molecular weight distribution of the resulting copolymer is represented in Figure 2 and its morphology in Figure 3.

### Example 9 - Synthesis of activating support S5.

528.2 mg (2.49 mmol) of pentafluorophenylboronic acid were suspended in heptane at a temperature of -10 °C. 2.50 mL (2.49 mmol) of TEA in solution in heptane (0.99 mol/L) were added. The mixture was kept under stirring at a temperature of -10°C for a period of time of 2 hours. The mixture was allowed to decant and the supernatant was retrieved with a cannula. The resulting product was dissolved in toluene and then impregnated on 0.83 g of deshydroxylated silica. The impregnation reaction was carried out at room temperature for a period of time of 1 hour. The impregnated support was washed 3 times in toluene and dried under dynamic vacuum.

### Example 10 - Copolymerisation of ethylene and 1-hexene with activating support S5.

The polymerisation of ethylene was carried out as in example 2a. The results are also reported in Table I.

### Example 11 - Synthesis of activating support S6.

Activating support S6 was prepared following the same method as support S2, in example 3. It was then placed in a fluidised bed and a calcination under oxygen was carried out at a temperature of 450 °C for a period of time of 4 hours.

### Example 12 - Copolymerisation of ethylene and 1-hexene with activating support S6.

The polymerisation of ethylene was carried out as in example 2a. The results are also reported in Table I.

### Comparative examples.

Synthesis of supports following the method of WO/098930, wherein an excess of aluminium alkyl was used with respect to the boronic acid instead of the one equivalent according to the present invention. The boronic acid was added in small portions on trialkyl aluminium and the mixture was kept under stirring at room temperature for a period of time of 15 minutes and then impregnated on deshydroxylated silica at room temperature for a period of time of 1 hour. The support was then dried under dynamic vacuum. Copolymerisation of ethylene and 1-hexene was then carried out under the same conditions as in the present invention.

### Comparative example 1 - Synthesis of support CS1.

A solution of 13.3 mL (13.2 mmol) of TEA in heptane (0.99 mol/L) was added to 2 mL of dry toluene. 558 mg (2.63 mmol) of pentafluorophenylboronic acid were added slowly to the toluene/TEA solution and the resulting mixture was kept under stirring for a period of time of 15 minutes at room temperature. The resulting product was then impregnated on 0.94 g of deshydroxylated silica. The impregnation reaction was carried out at room temperature for a period of time of 1 hour. The impregnated support was washed 3 times in toluene and dried under dynamic vacuum.

### Comparative example 2 - Copolymerisation of ethylene and 1-hexene with activating support CS1.

The polymerisation of ethylene was carried out as in example 2a. The results are also reported in Table I.

### Comparative example 3 - Synthesis of support CS2.

A solution of 10.4 mL (13.7 mmol) of TiBA in heptane (1.32 mol/L) was added to 2 mL of dry toluene. 581.7 mg (2.75 mmol) of pentafluorophenylboronic acid were added slowly to the toluene/TiBA solution and the resulting mixture was kept under stirring for a period of time of 15 minutes at room temperature. The resulting product was then impregnated on 1.01 g of deshydroxylated silica. The impregnation reaction was carried out at room temperature for a period of time of 1 hour. The impregnated support was washed 3 times in toluene and dried under dynamic vacuum.

### Comparative example 4 - Copolymerisation of ethylene and 1-hexene with activating support CS2.

The copolymerisation of ethylene and 1-hexene was carried out as in example 2a. The results are also reported in Table I.

### Comparative example 5 - Synthesis of support CS3.

A solution of 1.2 mL(1.45 mmol) of TEA in heptane (1.21 mol/L) was added to 2 mL of dry toluene. 156.7 mg (0.74 mmol) of pentafluorophenylboronic acid were added slowly to the toluene/TEA solution and the resulting mixture was kept under stirring for a period of time of 15 minutes at room temperature. The resulting product was then impregnated on 1.64 g of deshydroxylated silica. The impregnation reaction was carried out at room temperature for a period of time of 1 hour. The impregnated support was washed 3 times in toluene and dried under dynamic vacuum.

### Comparative example 6 - Copolymerisation of ethylene and 1-hexene with activating support CS3.

The copolymerisation of ethylene and 1-hexene was carried out as in example 2a. No activity was detected.

**TABLE I.**

| Example | Act. Sup.* mg | M_{cat}/mₛᵤₚ % | Activity g/mol/h | Mw kDa | PI | Tf °C |
|---|---|---|---|---|---|---|
| 2a | 33.3 | 0.4 | 2.5.10⁷ (239 g/g) | 307 | 7.2 | 111 |
| 4 | 30.5 | 0.4 | 1.26.10⁶ (12 g/g) | 361 | 5.3 | 110 |
| 6 | 23.7 | 0.4 | 0 | - | - | - |
| 8 | 32.8 | 0.4 | 1.59.10⁷ (152 g/g) | 322 | 5.6 | 112 |
| 10 | 42.0 | 0.4 | 4.90.10⁶ (47 g/g) | 297 | 5.2 | 110 |
| C2 | 32.3 | 0.4 | 0 | - | - | - |
| C4 | 21.9 | 0.4 | 0 | - | - | - |
| 2a | 20.7 | 1 | 1.81.10⁷ (432 g/g) | 302 | 8.2 | 112 |
| 2b | 31.5 | 1 | 1.01.10⁷ (241 g/g) | 320 | 9.2 | 112 |
| 4 | 35.1 | 1 | 4.55.10⁶ (109 g/g) | 282 | 4.6 | 109 |
| 6 | 36.3 | 1 | 0 | - | - | - |
| 8 | 28.3 | 1 | 1.52.10⁷ (364 g/g) | 380 | 7.1 | 114 |
| 10 | 41.1 | 1 | 1.12.10⁷ (268 g/g) | 238 | 5.7 | 112 |
| C2 | 26.1 | 1 | 0 | - | - | - |
| C4 | 25.1 | 1 | 0 | - | - | - |
| 2a | 15.3 | 2 | 9.65.10⁶ (461 g/g) | 324 | 8.2 | 111 |
| 4 | 25.4 | 2 | 2.68.10⁶ (128 g/g) | | | 110 |
| 8 | 25.7 | 2 | 1.02.10⁷ (488 g/g) | 228 | 8.6 | 113 |
| 12 | 26.2 | 0.4 | 0 | - | - | - |
| 12 | 29.5 | 1 | 0 | - | - | - |

| | | | | | | |
|---|---|---|---|---|---|---|
| * Act. Sup. mg stands for the amount of activating support expressed in mg. | | | | | | |

All polymerisations were carried out with 300 mL of heptane, under 3 bars of ethylene, 2mL of 1-hexene, 1 mmol/L of TiBA as scavenger, and at a temperature of 80 °C.

The polymers prepared according to the present invention were all produced as regular spherical grains.

The best activities were obtained with activating support S4 prepared in a single step. In addition, support S4 is very stable and reproduced the same activities when tested after being stored for one month.

It can be observed from the results of Table I that, when the ratio m_{metallocen}/mₛᵤₚₚₒᵣₜ is increased, the activity is either maintained or slightly increased.

### Example 13.

The homopolymerisation of ethylene was carried out with activating support S1 and the nickel-based Brookhart-type complex [(Ar)N=C(Me)-C(Me)=N(Ar)]NiBr₂ (FPC1) wherein Ar is 2,6-Me₂C₆H₃ said complex being represented by formula

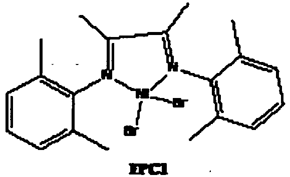

The copolymerisation of ethylene and 1-hexene was carried out at a temperature of 25 °C under 3 bars of ethylene, in 300 mL of heptane. The concentration of nickel [Ni] was of 5µmol/L, the ratio m_{complex}/mₛᵤₚₚₒᵣₜ was of 0.7% and the amount of 1-hexene was 2mL. 1 mmol/L of TEA was used as alkylating agent/scavenger. Polyethylene was produced with an activity of 1.36.10⁶ gPE/molNl/h, or 23 g/g. The polymer did not have any morphology.

## Claims

1. A method for preparing an activating support for the activation of metallocene or single site catalyst components that comprises the steps of:
a) reacting an alkylated derivative of aluminium and a perfluorinated boronic acid in stoechiometric quantities at a temperature of less than -5 °C, in a solvent selected from alkane;
b) optionally, evaporating, drying and suspending in toluene the reaction product of step a);
c) providing a support consisting of particles formed from at least one porous mineral oxide;
d) deshydroxylating the support by heating;
e) impregnating the reaction product either of step a) or of step b) on the deshydroxylated support;
f) washing and drying the support of step e);
g) retrieving an activating support.

2. The method of claim 1 wherein the alkylated derivative of aluminium is an minium alkyl selected from TiBA, TEA or DEAF, preferably TEA.

3. The method of claim 1 or claim 2 wherein the perfluorinated boronic acid is pentafluorophenylboronic acid.

4. The method of any one of the preceding claims wherein the alkane solvent is heptane.

5. The method of any one of the preceding claims wherein the alkylated derivative of aluminium and the perfluorinated boronic acid are mixed at a temperature of less than -10 °C.

6. The method of any one of the preceding claims wherein the impregnation reaction is carried out at room temperature for a period of time of one hour.

7. The activating support obtainable by the method of any one of claims 1 to 6.

8. An active catalyst system comprising the activating support of claim 7 and a metallocene catalyst component or Brookhart-type alpha-diimine Pd and Ni complexes.

9. The active catalyst system of claim 8 wherein the metallocene catalyst component is based on a bisindenyl or bistetrahydroindenyl ligand.

10. A method for homo- or co-polymerising ethylene and alpha-olefins that comprises the steps of:
a) injecting the solvent and optional scavenger into the reactor;
b) injecting the activating support of claim 7 into the reactor;
c) injecting a solution of the catalyst component into the reactor;
d) optionally, injecting the comonomer into the reactor,
e) injecting the monomer into the reactor and heating to a temperature of from 60 to 100 °C;
f) maintaining under polymerisation conditions;
g) desactivating the reactor and retrieving the polymer.

11. The method of claim 10 wherein the monomer is ethylene or propylene, preferably ethylene and the comonomer is propylene, butene or hexene.

12. The method of claim 10 or claim 11 wherein the scavenger is TEA or TiBA, preferably TIBA.

13. Polymers obtainable by the method of any one of claims 10 to 12.

## Patentansprüche

1. Verfahren zum Herstellen eines Aktivierungsträgers für die Aktivierung von Metallocen- oder Single-Site-Katalysatorkomponenten, wobei das Verfahren die folgenden Schritte umfasst:
a) Reagieren eines alkylierten Aluminiumderivats und einer perfluorierten Borsäure in stöchiometrischen Mengen bei einer Temperatur von weniger als -5 °C in einem Lösungsmittel ausgewählt aus Alkan;
b) optional Verdampfen, Trocknen und Suspendieren des Reaktionsprodukts von Schritt a) in Toluol;
c) Bereitstellen eines Trägers, der aus Partikeln besteht, die aus zumindest einem porösen Mineraloxid gebildet sind;
d) Enthydroxylieren des Trägers durch Erhitzen;
e) Imprägnieren des Reaktionsprodukts entweder von Schritt a) oder Schritt b) auf dem enthydroxylierten Träger;
f) Waschen und Trocknen des Trägers von Schritt e);
g) Gewinnen eines Aktivierungsträgers.

2. Verfahren nach Anspruch 1, wobei das alkylierte Aluminiumderivat ein Aluminiumalkyl, ausgewählt aus TiBA, TEA oder DEAF, und vorzugsweise TEA ist.

3. Verfahren nach Anspruch 1 oder 2, wobei die perfluorierte Borsäure Pentafluorphenylborsäure ist.

4. Verfahren nach einem der vorstehenden Ansprüche, wobei das Alkanlösungsmittel Heptan ist.

5. Verfahren nach einem der vorstehenden Ansprüche, wobei das alkylierte Aluminiumderivat und die perfluorierte Borsäure bei einer Temperatur von weniger als -10 °C vermischt werden.

6. Verfahren nach einem der vorstehenden Ansprüche, wobei die Imprägnierungsreaktion bei Raumtemperatur für einen Zeitraum von einer Stunde durchgeführt wird.

7. Aktivierungsträger, der mithilfe des Verfahrens nach einem der Ansprüche 1 bis 6 erhältlich ist.

8. Aktives Katalysatorsystem, umfassend den Aktivierungsträger nach Anspruch 7 und eine Metallocen-Katalysatorkomponente oder Alpha-Diimin-Pd - und -Ni-Komplexe vom Brookhart-Typ.

9. Aktives Katalysatorsystem nach Anspruch 8, wobei die Metallocen-Katalysatorkomponente auf einem Bisindenyl- oder Bistetrahydroindenylliganden basiert.

10. Verfahren zum Homo- oder Copolymerisieren von Ethylen und Alpha-Olefinen, das die folgenden Schritte umfasst:
a) Injizieren des Lösungsmittels und optionales Scavengers in den Reaktor;
b) Injizieren des Aktivierungsträgers von Anspruch 7 in den Reaktor;
c) Injizieren einer Lösung der Katalysatorkomponente in den Reaktor;
d) optional Injizieren des Comonomers in den Reaktor;
e) Injizieren des Monomers in den Reaktor und Erhitzen auf eine Temperatur von 60 bis 100 °C;
f) Halten unter Polymerisationsbedingungen;
g) Deaktivieren des Reaktors und Gewinnen des Polymers.

11. Verfahren nach Anspruch 10, wobei das Monomer Ethylen oder Propylen und vorzugsweise Ethylen ist, und wobei das Comonomer Propylen, Buten oder Hexen ist.

12. Verfahren nach Anspruch 10 oder 11, wobei der Scavenger TEA oder TiBA und vorzugsweise TiBA ist.

13. Polymere, die mithilfe des Verfahrens nach einem der Ansprüche 10 bis 12 erhältlich sind.

## Revendications

1. Procédé pour préparer un support d'activation pour l'activation de composants catalyseurs métallocènes ou à un seul site, qui comprend les étapes consistant à :
a) faire réagir un dérivé alkylé d'aluminium et un acide boronique perfluoré en des quantités stoechiométriques à une température inférieure à -5°C, dans un solvant choisi parmi les alcanes ;
b) éventuellement évaporer, sécher et mettre en suspension dans du toluène le produit réactionnel de l'étape a) ;
c) disposer d'un support constitué de particules formées d'au moins un oxyde minéral poreux ;
d) déshydroxyler le support par chauffage ;
e) imprégner le support déshydroxylé avec le produit réactionnel soit de l'étape a) soit de l'étape b) ;
f) laver et sécher le support de l'étape e) ;
g) récupérer un support d'activation.

2. Procédé selon la revendication 1, dans lequel le dérivé alkylé d'aluminium est un alkyl-aluminium choisi parmi le TiBA, le TEA et le DEAF, de préférence le TEA.

3. Procédé selon la revendication 1 ou la revendication 2, dans lequel l'acide boronique perfluoré est l'acide pentafluorophénylboronique.

4. Procédé selon l'une quelconque des revendications précédentes, dans lequel le solvant de type alcane est l'heptane.

5. Procédé selon l'une quelconque des revendications précédentes, dans lequel le dérivé alkylé d'aluminium et l'acide boronique perfluoré sont mélangés à une température inférieure à -10°C.

6. Procédé selon l'une quelconque des revendications précédentes, dans lequel la réaction d'imprégnation est effectuée à la température ambiante pendant une heure.

7. Support d'activation pouvant être obtenu par le procédé de l'une quelconque des revendications 1 à 6.

8. Système catalyseur actif comprenant le support d'activation de la revendication 7 et un composant catalyseur métallocéne ou des complexes de Pd et Ni et d'□-diimine de type Brookhart.

9. Système catalyseur actif selon la revendication 8, dans lequel le composant catalyseur métallocène est à base d'un ligand bis-indényle ou bistétrahydroindényle.

10. Procédé pour homo- ou co-polymériser de l'éthylène et des □-oléfine, qui comprend les étapes consistant à :
a) injecter le solvant et un piégeur facultatif dans le réacteur ;
b) injecter le support d'activation de la revendication 7 dans le réacteur ;
c) injecter une solution du composant catalyseur dans le réacteur ;
d) éventuellement injecter le comonomère dans le réacteur ;
e) injecter le monomère dans le réacteur et chauffer à une température de 60 à 100°C ;
f) maintenir dans des conditions de polymérisation ;
g) désactiver le réacteur et récupérer le polymère.

11. Procédé selon la revendication 10, dans lequel le monomère est l'éthylène ou le propylène, de préférence l'éthylène, et le comonomère est le propylène, le butène ou l'hexène.

12. Procédé selon la revendication 10 ou la revendication 11, dans lequel le piégeur est le TEA ou le TiBA, de préférence le TIBA.

13. Polymères pouvant être obtenus par le procédé de l'une quelconque des revendications 10 à 12
